# EUROPEAN PATENT SPECIFICATION

(11) **EP 2 712 217 B1**
(45) Date of publication and mention of the grant of the patent: **27.07.2016**
(21) Application number: 11777294.7
(22) Date of filing: 29.07.2011
(51) Int. Cl.: H04W 4/14, H04W 8/22, H04L 12/58, H04M 1/725

(54) **INFORMATION PROCESSING METHOD AND MOBILE TERMINAL**
INFORMATIONSVERARBEITUNGSVERFAHREN UND MOBILES ENDGERÄT
PROCÉDÉ DE TRAITEMENT D'INFORMATION ET TERMINAL MOBILE

(43) Date of publication of application: 26.03.2014
(73) Proprietor: Huawei Device Co., Ltd., Longgang District Shenzhen Guangdong 518129 (CN)
(72) Inventor: ZHU, Shujuan, Shenzhen Guangdong 518129 (CN); LI, Ying, Shenzhen Guangdong 518129 (CN)
(74) Representative: Pfenning, Meinig & Partner mbB
(86) International application number: PCT/CN2011/077806
(87) International publication number: WO 2011/137875

(56) References cited:
- CN-A- 1 859 625
- CN-A- 101 001 413
- CN-A- 101 022 590
- CN-A- 101 420 682
- GB-A- 2 412 546
- US-A1- 2008 268 882
- US-A1- 2011 165 895
- "Digital cellular telecommunications system (Phase 2+); Universal Mobile Telecommunications System (UMTS); Technical realization of Short Message Service (SMS) (3GPP TS 23.040 version 9.1.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V9.1.0, 1 January 2010 (2010-01-01), XP014045192,
- "Digital cellular telecommunications system (Phase 2); Technical realization of the Short Message Service (SMS) Point-to-Point (PP) (GSM 03.40);Rec_GSM 03.40_v 4.13.0_96", ETSI DRAFT; REC_GSM 03.40_V 4.13.0_96, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. zArchive, 3 December 2008 (2008-12-03), pages 1-104, XP014117184, [retrieved on 2008-12-03]

## Description

### TECHNICAL FIELD

The present invention relates to the field of mobile communications, and in particular, to an information processing method and a mobile terminal.

### BACKGROUND

With the development of mobile communications technologies, the requirements of users for mobile communications functions become increasingly higher, and users desire mobile terminals in various types of networks to be capable of supporting sending and receiving of a long SMS. The number of words in a long SMS is more than that in a common short message. For example, the number of words in a common short message is 70 or 75 while the number of words in a long SMS is 160 or 180. Of course, the specific number of words may vary.

A long SMS in an existing code division multiple access (Code Division Multiple Access, CDMA) system and a long SMS in a global system for mobile communications (Global System for Mobile communication, GSM) both use a user data header (User Data Header, UDH).

In a short message service (Short Message Service, SMS), a user data segment may be formed by a message body and a message header (namely UDH). A UDH defined in GSM03.40 includes one or more information elements (Information Element, IE). One IE is formed by three fields: identifier (identifier), length (length), and data (data). The identifier has many types among which only concat8 or concat16 identifies a long SMS and other types have their own different meanings. For example, some indicate a short message content format and some indicate a Vcard short message.

At present, most CDMA long SMS have only one message header (which includes concat8 or concat16) without considering processing of a long SMS with a plurality of message headers. This may cause a problem that a received long SMS with a plurality of message headers that is sent by a GSM or universal mobile telecommunications system (Universal Mobile Telecommunications System, UMTS) long SMS cannot be correctly displayed.

For example, in the prior art, when a terminal receives a long SMS, it considers by default that there is only one UDH. The terminal directly determines whether a first UDH includes concat8 or concat16. If yes, the UDH is stored as a segment of the long SMS. An attribute of the long SMS is recorded and matched with other segments that have been received. If not, the UDH is stored as a common short message. US 2011/165895 A1 relates to a method for electronic messaging with group sending, receiving, and replying capabilites. As described in paragraph [0009], according to the embodiment, the first device assembles an electronic message to send to a plurality of second devices at least in part by inserting a destination address into a user data header information element of the electronic message for each of said plurality of said second devices to which the electronic message is to be sent. As described in paragraph [0028], the basic idea of concatenated SMS is that message sequence data is stored in a user data header information element 303 with a particular IEI 330, just as address data is according to the invention (but of course with a different IEI value 330). As described in paragraph [0032], in step 700, an SMS message is received from a wireless carrier. In step 701, the receiving device checks to see whether the received message is an SMS message that has been enhanced according to the invention. In one embodiment, an application or an embedded service or process of the receiving device's operating system checks to see if any of the Information Elements in the UDH have an IEI that corresponds to one or more enhanced types of messages. If step 701 returned "true" or returned a type, then in step 702 a set of addresses is obtained from a plurality of Information Elements in the messages user data header. In step 703, and optional name lookup is performed. In step 704, the received message and all addresses gathered in step 702 are passed to a presentation layer of an application or of the device itself. Finally, in step 705, a user associated with the terminal device where the process of FIG. 7 occurs is presented with an enhanced message that includes the message text, and a list of addressees of the message, along with optional "Reply All" and "Reply To" actions. It is important to note that according to the invention, the presence of a complete list of those to whom the message was originally addressed by its sender, facilitates any number of functional elements that are known in the art but that have not heretofore been possible within SMS or text messaging systems. "Digital cellular telecommunications system (phase 2+); Universal Mobile Telecommunications System (UMTS); Technical realization of Short Message Service (SMS) (3GPP TS 23.040 version 9.1.0 Release 9))" is a technical specification. As described in pages 74-75, the Information-Element-Data field contains information set by the application in the SMS-SUBMIT so that the receiving entity is able to re-assemble the short message in the correct order. Each concatenated short message contains a reference number which together with the originating address and Service Centre address allows the receiving entity to discriminate between concatenated short messages sent from different originating SMEs and/or SCs.

When there are two UDHs in a received short message (for example, the first is a UDH of a format type, and the second is a message header that identifies a long SMS), the short message may not be considered as a segment of a long SMS, according to the prior art. As a result, such a short message cannot be received as a segment of a long SMS and cannot be displayed to a user.

### SUMMARY

Embodiments of the present invention provide an information processing method and a mobile terminal, which can implement correct processing of a long SMS with a plurality of message headers.

In one aspect, an embodiment provides an information processing method, including:
obtaining a plurality of user data header information (UDH) from a received short message;
determining whether a long SMS identifier exists in the plurality of user data header information, where the long SMS identifier is used to identify the received short message as a long SMS; and
if a determination result shows that a long SMS identifier exists in the plurality of user data header information, processing the received short message as a part of a long SMS; and if the determination result shows that no long SMS identifier exists in the plurality of user data header information, processing the received short message as a common short message.

In another aspect, an embodiment provides a mobile terminal, including:
an obtaining module, configured to obtain a plurality of user data header information from a received short message;
a determining module, configured to determine whether a long SMS identifier exists in the plurality of user data header information, where the long SMS identifier is used to identify the received short message as a long SMS; and
a processing module, configured to: if a determination result shows that a long SMS identifier exists in the plurality of user data header information, process the received short message as a part of a long SMS; and if the determination result shows that no long SMS identifier exists in the plurality of user data header information, processing the received short message as a common short message.

In the embodiments of the present invention, when it is determined whether a received short message is a long SMS, not only it is determined whether a long SMS identifier exists in a first user data header information, but also it is determined whether a long SMS identifier exists in other user data header information. In this way, a problem of false determination of a long SMS with a plurality of message headers is avoided, and correct processing of a long SMS with a plurality of message headers can be achieved.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a specific schematic flowchart of an information processing method according to an embodiment of the present invention;
FIG. 2 is a specific schematic structural diagram of a mobile terminal according to an embodiment of the present invention; and
FIG. 3 is another specific schematic flowchart of an information processing method according to an embodiment of the present invention.

### DESCRIPTION OF EMBODIMENTS

In embodiments of the present invention, when receiving a short message, a terminal side considers by default that a short message may have a plurality of UDHs, and finally determines whether the short message is a long SMS after determining separately whether a long SMS identifier exists in these UDHs.

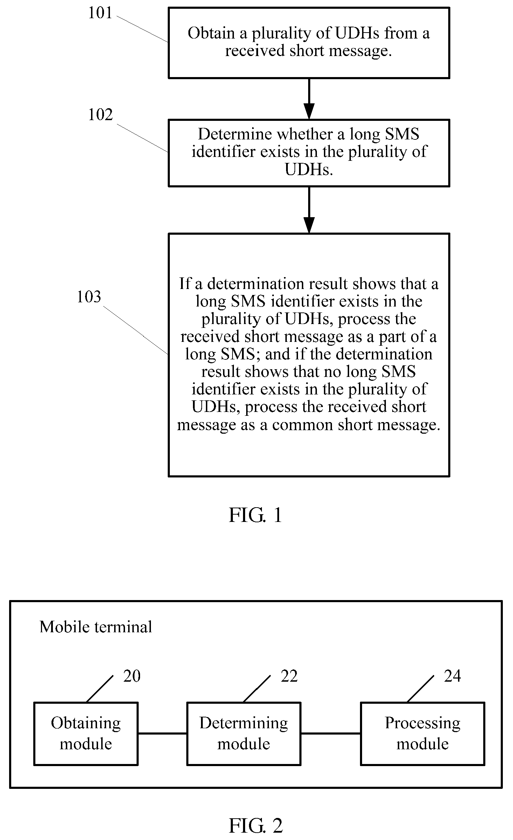

As shown in FIG 1, an embodiment of the present invention provides an information processing method based on the idea described above, where the method includes the following steps:
101: Obtain a plurality of UDHs from a received short message. A network used for receiving and sending a short message may be a CDMA, GSM, WCDMA, or TD-CDMA network and so on.
102: Determine whether a long SMS identifier exists in the plurality of UDHs, where the long SMS identifier is used to identify the received short message as a long SMS.

For example, a sequential determination method may be used to determine one by one whether a long SMS identifier exists in all the UDHs in the received short message. Of course, other determination sequences and methods may also be used according to a system setting, and the details will not be described herein.

If an identifier field in an information element in a UDH is used to identify whether a short message is a long SMS, it is checked during determination whether the identifier field in the information element in one of the plurality of UDHs is a long SMS identifier. If the UDH is of another structure, it is checked in a corresponding field, according to a specific protocol definition, whether the short message is identified as a long SMS in the UDH. Meanwhile, the long SMS identifier may specifically be concat8 or concat16. For example, when content in the identifier field of one UDH in a short message is concat8 or concat16, the short message is determined as a long SMS.

103: If a determination result shows that a long SMS identifier exists in the plurality of UDHs, process the received short message as a part of a long SMS; and if the determination result shows that no long SMS identifier exists in the UDHs, process the received short message as a common short message.

For example, if a long SMS identifier exists in the plurality of UDHs, the short message is stored as a segment of a long SMS. An attribute of the long SMS is recorded and matched with other segments that have been received. If no long SMS identifier exists in the plurality of UDHs, the short message is stored as a common short message.

Corresponding to the preceding method, an embodiment of the present invention further provides a mobile terminal. As shown in FIG 2, the mobile terminal includes: an obtaining module 20, configured to obtain a plurality of UDHs from a received short message; a determining module 22, configured to determine whether a long SMS identifier exists in the plurality of UDHs, where the long SMS identifier is used to identify the received short message as a long SMS; and a processing module 24, configured to: if a determination result shows that a long SMS identifier exists in the plurality of UDHs, process the received short message as a part of a long SMS; and if the determination result shows that no long SMS identifier exists in the plurality of UDHs, process the received short message as a common short message.

Similar to that in the preceding method, the determining module 22 may further be configured to determine sequentially whether a long SMS identifier exists in all the UDHs in the received short message, or determine whether an identifier field in an information element in the UDHs is a long SMS identifier.

The long SMS identifier includes concat8 or concat16.

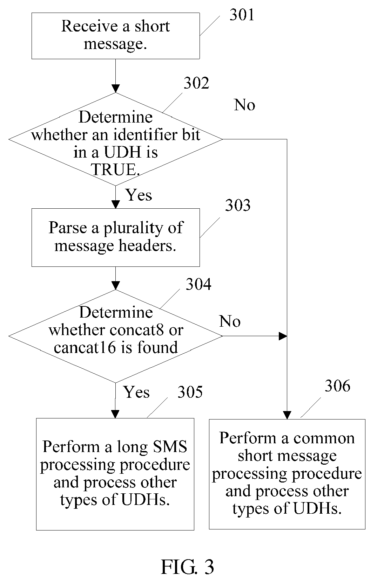

FIG. 3 is another specific schematic flowchart of an information processing method according to an embodiment of the present invention. The following describes each step in detail.

301: Receive a short message.

302: Check whether the message has an information header. For example, determine whether an identifier bit in a UDH is TRUE. If yes, go to step 303; otherwise, go to step 306.

303: Parse a plurality of UDHs in the received message.

304: Determine whether a UDH in the parsed UDHs includes concat8 or concat16. If a determination result shows that a UDH includes concat8 or concat16, go to step 305; otherwise, go to step 306.

305: Process the received message according to a processing method for a long SMS and accordingly process other UDHs obtained by parsing.

306: Process the received message according to a processing method for a common short message and accordingly process other UDHs obtained by parsing.

As can be seen from the preceding descriptions, in the embodiments of the present invention, when it is determined whether a received short message is a long SMS, not only a first UDH is determined, but also it is determined whether a long SMS identifier exists in other UDHs. In this way, a problem of false determination of a long SMS with a plurality of message headers is avoided, and correct processing of a long SMS with a plurality of message headers can be achieved.

Exemplary embodiments of the present invention are described above. It should be noted that various improvements and modifications may be further made by a person of ordinary skill in the art without departing from the principles of the present invention, and such improvements and modifications are also construed as falling within the protection scope of the present invention.

## Claims

1. An information processing method, wherein the method comprises:
obtaining (101), by a mobile terminal, a plurality of user data header information from a short message received by the mobile terminal;
determining (102), by the mobile terminal whether a long SMS identifier exists in the plurality of user data header information, wherein the long SMS identifier is used to identify the received short message as a long SMS; and
if a determination result shows that a long SMS identifier exists in the plurality of user data header information, processing (103) the received short message as a part of a long SMS; and if the determination result shows that no long SMS identifier exists in the plurality of user data header information, processing the received short message as a common short message.

2. The information processing method according to claim 1, wherein the determining whether a long SMS identifier exists in the plurality of user data header information comprises:
determining sequentially whether a long SMS identifier exists in all user data header information in the received short message.

3. The information processing method according to claim 1, wherein the determining whether a long SMS identifier exists in the plurality of user data header information comprises:
determining whether an identifier field in an information element in the plurality of user data header information is a long SMS identifier.

4. The information processing method according to any one of claims 1 or 2, wherein the long SMS identifier comprises concat8 or concatl6.

5. The information processing method according to any one of claims 1 or 2, where the method is used in a CDMA or GSM network.

6. A mobile terminal, wherein the mobile terminal comprises:
an obtaining module (20), configured to obtain a plurality of user data header information from a received short message;
a determining module (22), configured to determine whether a long SMS identifier exists in the plurality of user data header information, wherein the long SMS identifier is used to identify the received short message as a long SMS; and
a processing module (24), configured to: if a determination result shows that a long SMS identifier exists in the plurality of user data header information, process the received short message as a part of a long SMS; and if the determination result shows that no long SMS identifier exists in the plurality of user data header information, process the received short message as a common short message.

7. The mobile terminal according to claim 6, wherein the determining module is further configured to determine sequentially whether a long SMS identifier exists in all user data header information in the received short message.

8. The mobile terminal according to claim 6, wherein the determining module is further configured to determine whether an identifier field in an information element in the plurality of user data header information is a long SMS identifier.

9. The mobile terminal according to any one of claims 6 or 7, wherein the long SMS identifier comprises concat8 or concatl6.

10. The mobile terminal according to any one of claims 6 or 7, wherein the mobile terminal is used in a CDMA or GSM network.

## Patentansprüche

1. Informationsverarbeitungsverfahren, wobei das Verfahren umfasst:
Erlangen (101), durch ein Mobilendgerät, einer Vielzahl von Benutzerdaten-Header-Informationen von einer durch das Mobilendgerät empfangenen Kurznachricht (Short Message),
Bestimmen (102), durch das Mobilendgerät, ob ein Lang-SMS-Identifizierer in der Vielzahl von Benutzerdaten-Header-Informationen vorhanden ist, wobei der Lang-SMS-Identifizierer verwendet wird, um die empfangene Kurznachricht als eine Lang-SMS zu identifizieren, und
wenn ein Bestimmungsergebnis zeigt, dass ein Lang-SMS-Identifizierer in der Vielzahl von Benutzerdaten-Header-Informationen vorhanden ist, Verarbeiten (103) der empfangenen Kurznachricht als ein Teil einer langen SMS; und wenn das Bestimmungsergebnis zeigt, dass kein Lang-SMS-Identifizierer in der Vielzahl von Benutzerdaten-Header-Informationen vorhanden ist, Verarbeiten der empfangenen Kurznachricht als eine gewöhnliche Kurznachricht.

2. Informationsverarbeitungsverfahren nach Anspruch 1, wobei das Bestimmen, ob ein Lang-SMS-Identifizierer in der Vielzahl von Benutzerdaten-Header-Informationen vorhanden ist, umfasst:
sequentlelles Bestimmen, ob ein Lang-SMS-Identifizierer in allen Benutzerdaten-Header-Informationen in der empfangenen Kurznachricht vorhanden ist.

3. Informationsverarbeitungsverfahren nach Anspruch 1, wobei das Bestimmen, ob ein Lang-SMS-Identifizierer in der Vielzahl von Benutzerdaten-Header-Informationen vorhanden ist, umfasst:
Bestimmen, ob ein Identifiziererfeld in einem Informationselement in der Vielzahl von Benutzerdaten-Header-Informationen ein Lang-SMS-Identifizierer ist.

4. Informationsverarbeitungsverfahren nach einem der Ansprüche 1 oder 2, wobei der Lang-SMS-Identifizierer concat8 oder concat16 umfasst.

5. Informationsverarbeitungsverfahren nach einem der Ansprüche 1 oder 2, wobei das Verfahren in einem CDMA- oder GSM-Netz verwendet wird.

6. Mobilendgerät, wobei das Mobilendgerät umfasst:
ein Erlangungsmodul (20), das derart konfiguriert ist, dass es eine Vielzahl von Benutzerdaten-Header-Informationen von einer empfangenen Kurznachricht erlangt,
ein Bestimmungsmodul (22), das derart konfiguriert ist, dass es bestimmt, ob ein Lang-SMS-Identifizierer in der Vielzahl von Benutzerdaten-Header-Informationen vorhanden ist, wobei der Lang-SMS-Identifizierer verwendet wird, um die empfangene Kurznachricht als eine Lang-SMS zu identifizieren, und
ein Verarbeitungsmodul (24), das zum Folgenden konfiguriert ist: wenn ein Bestimmungsergebnis zeigt, dass ein Lang-SMS-Identifizierer in der Vielzahl von Benutzerdaten-Header-Informationen vorhanden ist, Verarbeiten der empfangenen Kurznachricht als ein Teil einer langen SMS; und wenn das Bestimmungsergebnis zeigt, dass kein Lang-SMS-Identifizierer in der Vielzahl von Benutzerdaten-Header-Informationen vorhanden ist, Verarbeiten der empfangenen Kurznachricht als eine gewöhnliche Kurznachricht.

7. Mobilendgerät nach Anspruch 6, wobei das Bestimmungsmodul ferner derart konfiguriert ist, dass es sequentiell bestimmt, ob ein Lang-SMS-Identifizierer in allen Benutzerdaten-Header-Informationen in der empfangenen Kurznachricht vorhanden ist.

8. Mobilendgerät nach Anspruch 6, wobei das Bestimmungsmodul ferner derart konfiguriert ist, dass es bestimmt, ob ein Identifiziererfeld in einem Informationselement in der Vielzahl von Benutzerdaten-Header-Informationen ein Lang-SMS-Identifizierer ist.

9. Mobilendgerät nach einem der Ansprüche 6 oder 7, wobei der Lang-SMS-Identifizierer concat8 oder concat16 umfasst.

10. Mobilendgerät nach einem der Ansprüche 6 oder 7, wobei das Mobilendgerät in einem CDMA- oder GSM-Netz verwendet wird.

## Revendications

1. Procédé de traitement d'informations, le procédé comprenant les étapes suivantes :
obtenir (101), par un terminal mobile, une pluralité d'informations d'en-tête de données utilisateur à partir d'un mini message reçu par le terminal mobile ;
déterminer (102), par le terminal mobile, si un identifiant de SMS long existe dans la pluralité d'informations d'en-tête de données utilisateur, l'identifiant de SMS long étant utilisé pour identifier le mini message reçu comme un SMS long ; et
si un résultat de détermination montre qu'un identifiant de SMS long existe dans la pluralité d'informations d'en-tête de données utilisateur, traiter (103) le mini message reçu comme une partie d'un SMS long; et si le résultat de détermination montre qu'aucun identifiant de SMS long n'existe dans la pluralité d'informations d'en-tête de données utilisateur, traiter le mini message reçu comme un mini message commun.

2. Procédé de traitement d'informations selon la revendication 1, dans lequel l'étape consistant à déterminer si un identifiant de SMS long existe dans la pluralité d'informations d'en-tête de données utilisateur comprend :
déterminer séquentiellement si un identifiant de SMS long existe dans toutes les informations d'en-tête de données utilisateur dans le mini message reçu.

3. Procédé de traitement d'informations selon la revendication 1, dans lequel l'étape consistant à déterminer si un identifiant de SMS long existe dans la pluralité d'informations d'en-tête de données utilisateur comprend :
déterminer si un champ d'identifiant dans un élément d'informations dans la pluralité d'informations d'en-tête de données utilisateur est un identifiant de SMS long.

4. Procédé de traitement d'informations selon l'une quelconque des revendications 1 ou 2, dans lequel l'identifiant de SMS long comprend concat8 ou concat16.

5. Procédé de traitement d'informations selon l'une quelconque des revendications 1 ou 2, dans lequel le procédé est utilisé dans un réseau CDMA ou GSM.

6. Terminal mobile, dans lequel le terminal mobile comprend :
un module d'obtention (20), configuré pour obtenir une pluralité d'informations d'en-tête de données utilisateur à partir d'un mini message reçu ;
un module de détermination (22), configuré pour déterminer si un identifiant de SMS long existe dans la pluralité d'informations d'en-tête de données utilisateur,
l'identifiant de SMS long étant utilisé pour identifier le mini message reçu comme un SMS long ; et
un module de traitement (24), configuré pour : si un résultat de détermination montre qu'un identifiant de SMS long existe dans la pluralité d'informations d'entête de données utilisateur, traiter le mini message reçu comme une partie d'un SMS long ; et si le résultat de détermination montre qu'aucun identifiant de SMS long n'existe dans la pluralité d'informations d'en-tête de données utilisateur, traiter le mini message reçu comme un mini message commun.

7. Terminal mobile selon la revendication 6, dans lequel le module de détermination est en outre configuré pour déterminer séquentiellement si un identifiant de SMS long existe dans toutes les informations d'en-tête de données utilisateur dans le mini message reçu.

8. Terminal mobile selon la revendication 6, dans lequel le module de détermination est en outre configuré pour déterminer si un champ d'identifiant dans un élément d'informations dans la pluralité d'informations d'en-tête de données utilisateur est un identifiant de SMS long.

9. Terminal mobile selon l'une quelconque des revendications 6 ou 7, dans lequel l'identifiant de SMS long comprend concat8 ou concat16.

10. Terminal mobile selon l'une quelconque des revendications 6 ou 7, dans lequel le terminal mobile est utilisé dans un réseau CDMA ou GSM.
